# EUROPEAN PATENT APPLICATION

(11) **EP 4 474 899 A1**
(43) Date of publication of application: **11.12.2024**
(21) Application number: 23177153.6
(22) Date of filing: 05.06.2023
(51) Int. Cl.: G03B 15/05, F21V 15/02, H04N 23/56, F21Y 115/10, H05K 7/02, H05K 9/00

(54) **PROTECTOR FOR SURFACE-MOUNT LEDS**

(71) Applicant: Magna Electronics Sweden AB, 447 37 Vårgårda (SE)
(72) Inventor: HOMUTESCU, Adrian, 700051 Iasi (RO); CAZACU, Vlad, 700051 Iasi (RO)
(74) Representative: Reichert & Lindner Partnerschaft Patentanwälte

(57) **Abstract**

A protector (1) for surface-mounted LEDs (6) includes a support portion (10) to connect to a circuit carrier (80), e.g., a PCB, on which the LEDs (6) are mounted, and a cover portion (20) supported by and connected to the support portion (10). The cover portion (20) has one or more openings (21) for radiation from the LEDs (6) to pass through. The protector (1) is mounted on the circuit carrier (80) in such a way that the openings (21) of the cover portion (20) are aligned with the LEDs (6).

## Description

The invention relates to a protector for protecting surface-mount light-emitting diodes against mechanical damage.

Light-emitting diodes (LEDs) in surface-mount technology are used in a wide variety of devices in diverse areas of technology. Such LEDs are mounted on a circuit carrier, often a printed circuit board (PCB). During assembly of a device, such a circuit carrier with the LEDs mounted has to be handled for placing it in and connecting it to the device of which it is to form a component. This handling of the circuit carrier bears the risk of damage to the LEDs, in particular, if assembly is challenging, for example due to tight space conditions. One specific use example is driver monitoring systems, where a camera for monitoring the driver of a vehicle is mounted next to LEDs operating in the infrared section of the electromagnetic spectrum for providing illumination for the scene to be captured by the camera. Here, often the available space next to the camera is small, requiring rather precise and controlled movements during assembly; this implies a high risk of damage to the LEDs.

CN 112379567 A discloses an optical imaging system, which in a housing includes a processing module, an image sensor, a signal module, a power module, and a light emitting module. Light from the light emitting module is collimated by a collimating lens, passes into a light guide as parallel light, and reaches a diverging lens, which turns the parallel light into divergent light to be emitted from the optical imaging system. The diverging lens is positioned in a portion of the housing.

It is an object of the invention to reduce the risk of mechanical damage to surface-mount LEDs during assembly.

This object is achieved by a protector according to claim 1. Claim 8 relates to a corresponding assembly. The dependent claims refer to advantageous embodiments.

The protector according to the invention for one or more surface-mount light-emitting diodes includes a support portion and a cover portion. The support portion and the cover portion are separate components. The support portion is provided for mechanically connecting to a circuit carrier on which the light-emitting diodes are mounted. The cover portion is configured to be mechanically connected to and supported by the support portion. The cover portion has one or more openings for allowing radiation from the one or more light-emitting diodes to pass through the cover portion. The openings may in particular be simple through-holes. There is a respective opening for each light-emitting diode to be protected by the protector. This assures that light from each such light-emitting diode can escape from the protector but does not open up the cover portion unnecessarily. The support portion and cover portion forming the protector, when mounted on a circuit carrier, surround the light-emitting diodes on a number of sides; in particular, the cover portion restricts access along a direction perpendicular to a surface of the circuit carrier on which circuitry is laid out and surface-mount devices connected. Along this direction, the cover portion, or at least a part of the cover portion including the openings, is at a larger distance from this surface than any part of a light-emitting diode the protector is to protect. The protector also makes accidental access to the LEDs along directions parallel to this surface less likely. Therefore, by covering LEDs with a protector according to the invention the risk of mechanically damaging the LEDs is reduced.

In an embodiment the support portion is configured to be connected to the circuit carrier by soldering or by a snap connection.

In an embodiment, the cover portion is configured to be connected to the support portion by a snap connection. A snap connection is easily established without requiring special equipment and may also be undone without special equipment should access to the LEDs be necessary at a later stage.

In an embodiment, the support portion includes a sidewall to be connected to the circuit carrier and a pass-through section connected to the sidewall, the pass-through section having an opening for the light-emitting diodes to protrude through. Here the support portion is connected to the circuit carrier by connecting its sidewall to the circuit carrier, for example, as stated above, by soldering or by a snap connection. A line where the sidewall connects to the circuit carrier can be of any shape compatible with the requirement that the protector is to protect the LEDs and therefore said line has to at least partially circumscribe an area within which the LEDs concerned are located. For example, the line may form an open or closed polygon.

In a more specific variant of this embodiment the support portion is shaped out of one piece of sheet metal; the sidewall may be perpendicular to the pass-through section.

As a non-limiting example, the sheet metal may have a thickness of 0.2 mm. The cover portion may also be made of sheet metal. Using sheet metal as material has the additional advantage of providing increased heat extraction, compared with a protector made of plastic, for example.

The support portion shaped according to this embodiment can be placed over the LEDs to be protected and the support portion can be mechanically connected to the circuit carrier. The LEDs protrude through the opening in the pass-through section. Subsequently, the cover portion is attached to the support portion; the cover portion covers the LEDs apart from the openings in the cover portion. In specific examples the sidewall has plural sections, which sections are separated from each other but connected via the pass-through section. For instance, and without being limited thereto, the sidewall may have precisely two, or precisely three, or precisely four sections.

An assembly according to the invention includes a circuit carrier, one or more light-emitting diodes surface-mounted to the circuit carrier, and a protector according to the invention, as described above. The protector is mounted on the circuit carrier in such a way that each of the one or more light emitting diodes is aligned with one of the openings of the cover portion. This alignment assures that while the protector provides protection of the LEDs against mechanical damage, the light from the LEDs can still be emitted properly.

For example, the protector may be soldered to the circuit carrier or may be connected to the circuit carrier by a snap connection. The circuit carrier has to be configured accordingly. For a snap connection, for instance, slots could be provided in the circuit carrier for snap connectors at the support portion of the protector to pass through and snap in.

The assembly may include plural surface-mounted LEDs each of which is protected by a separate protector. The assembly may additionally or alternatively include plural LEDs which are protected by a common protector.

The circuit carrier may be a printed circuit board (PCB).

Below, the invention and its advantages will be discussed with reference to the accompanying schematic figures.
- Figure 1: shows an assembly according to prior art.
- Figure 2: shows an assembly according to the invention.
- Figure 3: shows an assembly according to the invention.
- Figure 4: shows a top view of an assembly according to the invention.
- Figure 5: is a sectional view of an assembly according to the invention.
- Figure 6: is a further view of an assembly according to the invention.
- Figure 7: is a further view of an assembly according to the invention showing two different embodiments of protectors according to the invention.
- Figure 8: is a three-dimensional view of an embodiment of a protector according to the invention.
- Figure 9: is a three-dimensional exploded view of the protector shown in Fig. 8.
- Figure 10: is a three-dimensional view of an embodiment of a protector according to the invention.
- Figure 11: is a three-dimensional exploded view of the protector shown in Fig. 10.
- Figure 12: is a three-dimensional view of an embodiment of a protector according to the invention.
- Figure 13: is a three-dimensional exploded view of the protector shown in Fig. 12.

The figures only show examples of how the invention can be implemented and are not to be taken as a limitation of the invention to the examples shown.

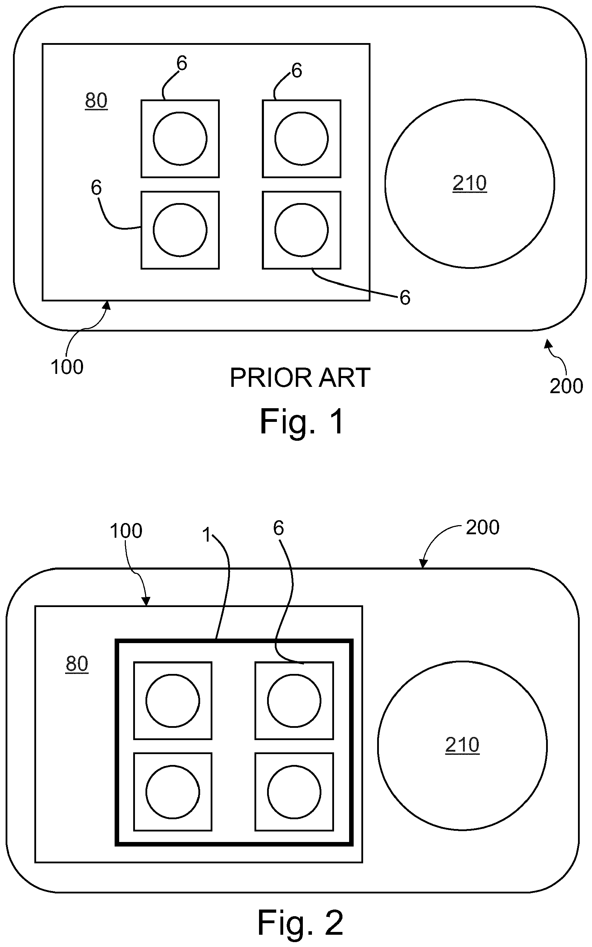

**Fig. 1** shows a camera module 200 including prior art assembly 100 and a camera 210. The assembly 100 includes a circuit carrier 80, which here is a printed circuit board, on which four LEDs 6 are surface-mounted. The circuit carrier 80 includes further electronic devices, which, however, are not relevant for the description of the invention and therefore are not shown. The LEDs 6 are mounted on a surface of the circuit carrier 80; there is no specific protection for the LEDs 6, which exposes the LEDs 6 to the risk of mechanical damage when assembly 100 is mounted into the camera module 200.

**Fig. 2** again shows a camera module 200, largely analogous to the camera module shown in Fig. 1. Most elements have been discussed in the context of Fig. 1. Here, however, the camera module 200 includes an assembly 100 according to the invention. A protector 1 connected to the circuit carrier 80 provides mechanical protection for the four LEDs 6 surface-mounted on the circuit carrier 80. This mechanical protection reduces the risk of mechanical damage when assembly 100 is mounted into the camera module 200. In the embodiment shown there is a common protector 1 for the four LEDs 6.

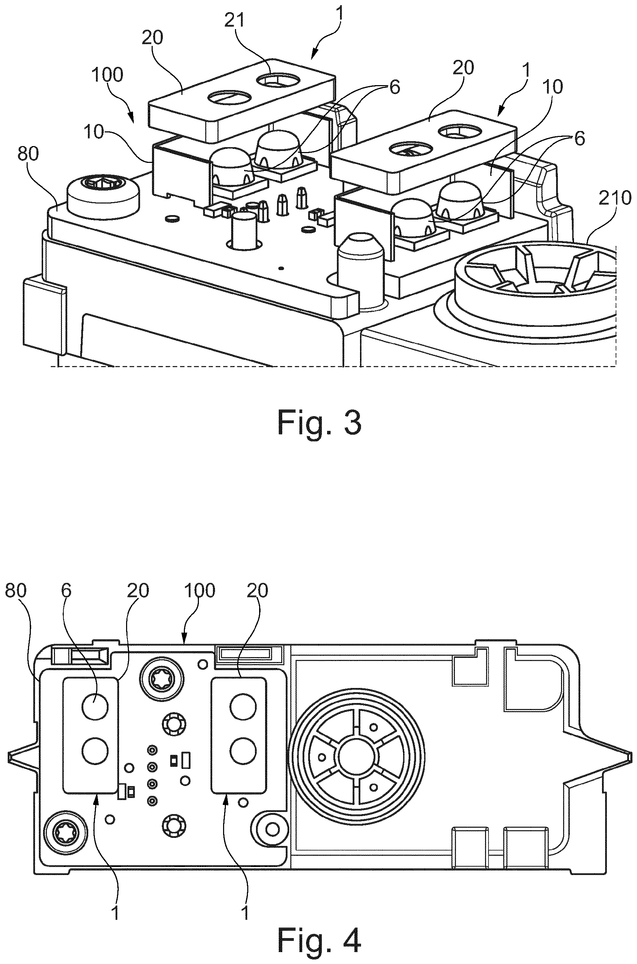

**Fig. 3** shows an assembly 100 according to the invention. On a circuit carrier 80 four LEDs 6 are surface-mounted. Shown are two protectors 1 according to the invention. Each protector 1 is provided to protect two of the LEDs 6. The protectors 1 are shown in an exploded view with respective cover portion 20 separated from corresponding support portion 10. Support portions 10 are connected to the circuit carrier 80. Each cover portion 20 has two openings 21, each opening 21 aligned with one of the LEDs 6.

The assembly 100 here, and indeed in further figures herein, is part of a camera module of which camera 210 is shown. The invention, however, is not restricted to camera modules.

**Fig. 4** is a top view of the assembly 100 according to the invention shown in Fig. 3. Cover portions 20 of the protectors 1 are connected to the support portions 10 (not visible here, see Fig. 3). It can be clearly seen that each of the LEDs 6 mounted on the circuit carrier 80 is aligned with one of the openings 21 (see Fig. 3) of the cover portion 20.

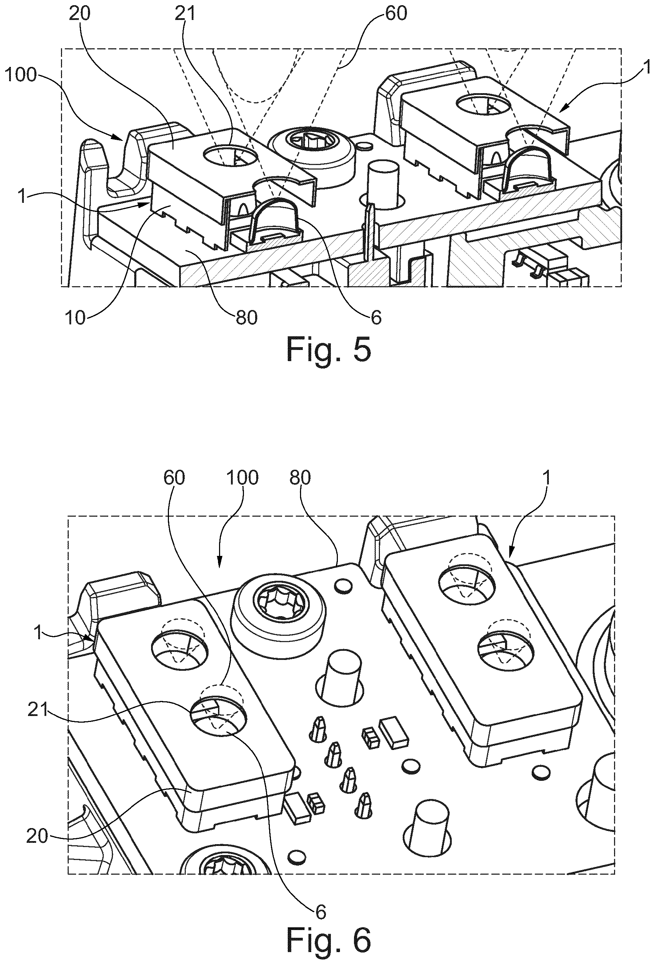

**Fig. 5** is a sectional view of assembly 100 according to the invention shown in Fig. 3. Shown are two protectors 1, each with support portion 10 connected to circuit carrier 80 and cover portion 20 connected to the support portion 10. Also shown is light 60 emitted from the LEDs 6 surface-mounted to the circuit carrier 80 and passing through openings 21 in cover portion 20. Each opening 21 is aligned with one of the LEDs 6. It should be appreciated here that the LEDs 6 do not protrude through the openings 21 but are entirely within the respective protector 1. This arrangement allows light 60 to be emitted from the assembly 100 while providing optimal mechanical protection for the LEDs 6.

**Fig. 6** is a further view of the assembly 100 according to the invention shown in Fig. 3. The view shown here again clearly illustrates the alignment of the LEDs 6 mounted on the circuit carrier 80 with the openings 21 in the cover portions 20 of protectors 1. This allows light 60 to pass through the cover portion 20, while the LEDs 6 are mechanically protected, as, in the perspective shown, they are below the cover portion 20.

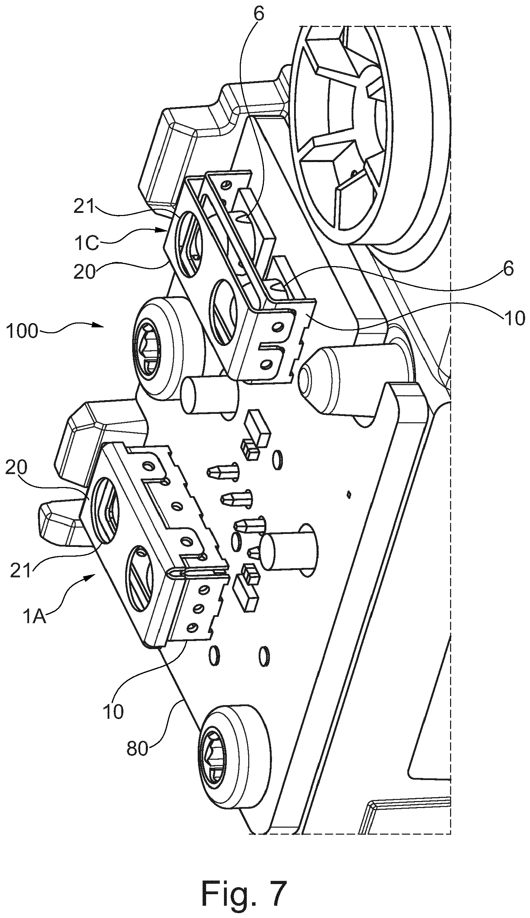

**Fig. 7** shows an assembly 100 according to the invention, with two different embodiments of protectors 1A, 1C. Each of the protectors 1A and 1C protects two LEDs 6 which are aligned with respective openings 21 in cover portion 20 of the respective protector 1A, 1C. For each protector 1A, 1C the cover portion 20 is connected to a support portion 10 by a snap connection; the support portion 10 is mechanically connected to circuit carrier 80.

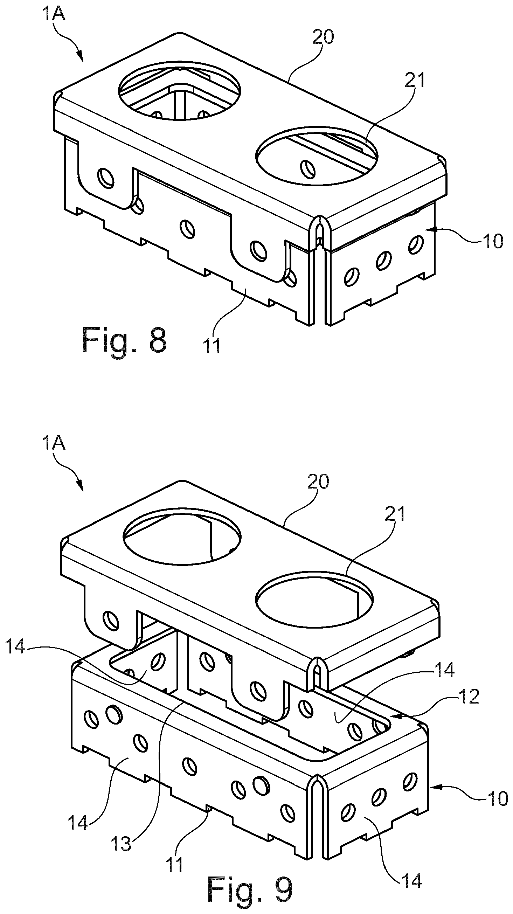

**Fig. 8** shows a protector 1A according to the invention. Support portion 10 supports cover portion 20, which is mounted to sidewall 11 of the support portion 10 by a snap connection. Cover portion 20 has two openings 21, to be aligned with LEDs on a circuit carrier, for light from these LEDs to exit from the protector 1A.

**Fig. 9** shows the protector 1A of Fig. 8 in an exploded view, with cover portion 20 detached from support portion 10. Support portion 10 has sidewall 11 and pass-through section 12, which is perpendicular to the sidewall 11. Pass-through section 12 has an opening 13 for LEDs on a circuit carrier to protrude through. Note that while the LEDs are intended to protrude through opening 13 of the pass-through section 12, the LEDs are intended not to protrude through openings 21 in the cover portion 20. The sidewall 11 has four sections 14; the four sections 14 are separate from each other but are connected via the pass-through section 12. The support portion 10 here is made from a single piece of sheet metal. The cover portion 20 here also is made from a single piece of sheet metal.

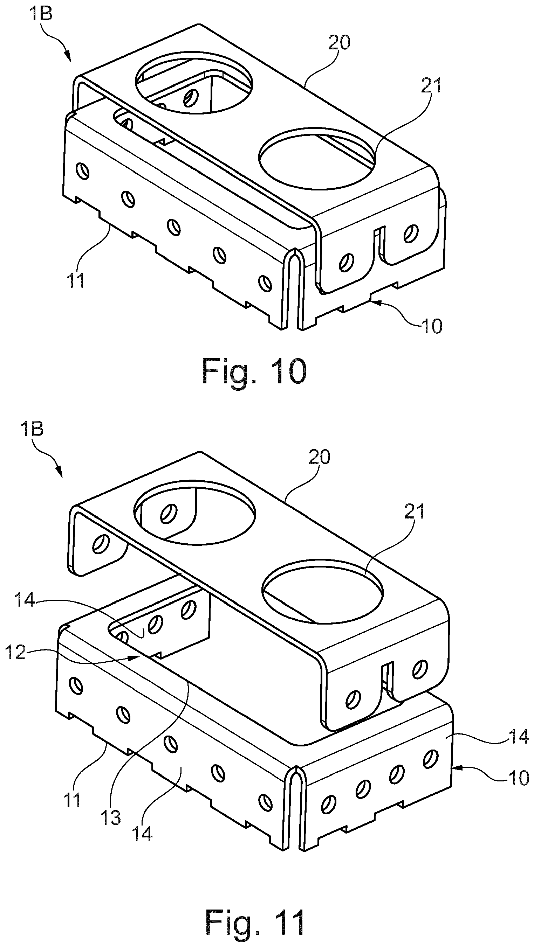

**Fig. 10** shows a protector 1B according to the invention. Support portion 10 supports cover portion 20, which is mounted to sidewall 11 of the support portion 10 by a snap connection. Cover portion 20 has two openings 21, to be aligned with LEDs on a circuit carrier, for light from these LEDs to exit from the protector 1B.

**Fig. 11** shows the protector 1B of Fig. 10 in an exploded view, with cover portion 20 detached from support portion 10. Support portion 10 has sidewall 11 and pass-through section 12, which is perpendicular to the sidewall 11. Pass-through section 12 has an opening 13 for LEDs on a circuit carrier to protrude through. Note that while the LEDs are intended to protrude through opening 13 of the pass-through section 12, the LEDs are intended not to protrude through openings 21 in the cover portion 20. The sidewall 11 has three sections 14; the three sections 14 are separate from each other but are connected via the pass-through section 12. The support portion 10 here is made from a single piece of sheet metal. The cover portion 20 here also is made from a single piece of sheet metal.

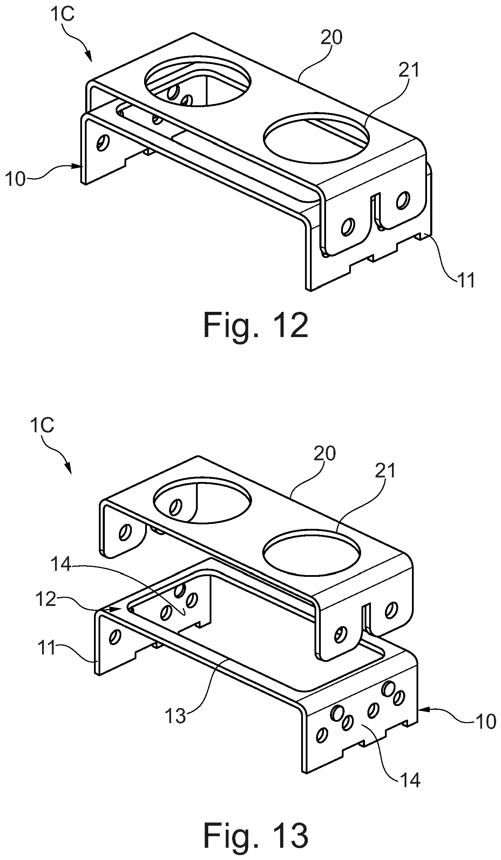

**Fig. 12** shows a protector 1C according to the invention. Support portion 10 supports cover portion 20, which is mounted to sidewall 11 of the support portion 10 by a snap connection. Cover portion 20 has two openings 21, to be aligned with LEDs on a circuit carrier, for light from these LEDs to exit from the protector 1C.

**Fig. 13** shows the protector 1C of Fig. 12 in an exploded view, with cover portion 20 detached from support portion 10. Support portion 10 has sidewall 11 and pass-through section 12, which is perpendicular to the sidewall 11. Pass-through section 12 has an opening 13 for LEDs on a circuit carrier to protrude through. Note that while the LEDs are intended to protrude through opening 13 of the pass-through section 12, the LEDs are intended not to protrude through openings 21 in the cover portion 20. The sidewall 11 has two sections 14; the two sections 14 are separate from each other but are connected via the pass-through section 12. The support portion 10 here is made from a single piece of sheet metal. The cover portion 20 here also is made from a single piece of sheet metal.

Comparing the three protectors 1A, 1B, and 1C shown in Figs. 8 to 13, the following can be said: Protector 1A, having a sidewall 11 with four sections 14 provides a larger soldering area on the support portion 10 for connecting to a circuit carrier. Therefore, the protector 1A can be more firmly attached to the circuit carrier, ensuring more robustness against external forces. Protectors 1B and 1C, on the other hand, require less material, and therefore are lighter and more cost effective. Besides, as the sidewall 11 has only three or two, respectively, sections 14 instead of four, protectors 1B and 1C allow better access for automatic optical inspection of a circuit carrier with LEDs, protectors, and any further components mounted.

### List of Reference Signs

- 1: protector
- 1A: protector
- 1B: protector
- 1C: protector
- 6: LED
- 10: support portion
- 11: sidewall
- 12: pass-through section
- 13: opening (in pass-through section)
- 14: section (of sidewall)
- 20: cover portion
- 21: opening (in cover portion)
- 60: light
- 80: circuit carrier
- 100: assembly
- 200: camera module
- 210: camera

## Claims

1. Protector (1) for one or more surface-mount light-emitting diodes (6), the protector (1) including:
a support portion (10) for connecting to a circuit carrier (80) on which the light-emitting diodes (6) are mounted;
a cover portion (20),
the cover portion (20) configured to be connected to and supported by the support portion (10),
the cover portion (20) having one or more openings (21) for allowing radiation from the one or more light-emitting diodes (6) to pass through the cover portion (20).

2. Protector (1) according to claim 1, wherein the support portion (10) is configured to be connected to the circuit carrier (80) by soldering or by a snap connection.

3. Protector (1) according to claim 1 or 2, wherein the cover portion (20) is configured to be connected to the support portion (10) by a snap connection.

4. Protector (1) according to one of the claims 1 to 3, wherein the support portion (10) includes a sidewall (11) to be connected to the circuit carrier (80) and a pass-through section (12) connected to the sidewall (11), the pass-through section (12) having an opening (13) for the light-emitting diodes (6) to protrude through.

5. Protector (1) according to claim 4, wherein the support portion (10) is shaped out of one piece of sheet metal.

6. Protector (1A, 1B, 1C) according to claim 5, wherein the sidewall (11) has plural sections (14), which sections (14) are separated from each other but connected via the pass-through section (12).

7. Protector (1A, 1B, 1C) according to claim 6, wherein the sidewall (11) has precisely two, or precisely three, or precisely four sections (14), which sections (14) are separated from each other but connected via the pass-through section (12).

8. Assembly (100) including:
a circuit carrier (80);
one or more light-emitting diodes (6) surface-mounted to the circuit carrier (80);
a protector (1) according to one of the claims 1 to 7, mounted on the circuit carrier (80) in such a way that each of the one or more light emitting diodes (6) is aligned with one of the openings (21) of the cover portion (20).

9. Assembly (100) according to claim 8, wherein the assembly (100) includes plural light-emitting diodes (6) surface-mounted to the circuit carrier (80), and there is a respective protector (1) for each of the plural light-emitting diodes (6).

10. Assembly (100) according to claim 8, wherein the assembly (100) includes plural light emitting diodes (6) surface-mounted to the circuit carrier (80), and there is a common protector (1) for the plural light-emitting diodes (6).
